# EUROPÄISCHE PATENTSCHRIFT

(11) **EP 2 954 996 B1**
(45) Veröffentlichungstag und Bekanntmachung des Hinweises auf die Patenterteilung: **26.06.2019**
(21) Anmeldenummer: 15169303.3
(22) Anmeldetag: 27.05.2015
(51) Int. Cl.: B29C 45/00, F21S 41/20, B29C 45/28, B29C 45/56, B29L 11/00

(54) **WERKZEUG MIT NADELVERSCHLUSSSYSTEM FÜR EINE SPRITZGIESSMASCHINE**
MOULD WITH A NEEDLE VALVE UNIT FOR AN INJECTION MOULDING MACHINE
MOULE AVEC SYSTÈME D'OBTURATION À AIGUILLES POUR UNE MACHINE DE MOULAGE PAR INJECTION

(30) Priorität: 11.06.2014 AT 504002014
(43) Veröffentlichungstag der Anmeldung: 16.12.2015
(73) Patentinhaber: ZKW Group GmbH, 3250 Wieselburg (AT)
(72) Erfinder: Binderlehner, Horst, 3373 Kemmelbach (AT); Prammer, Andreas, 3250 Wieselburg (AT); Haselsteiner, Michael, 3261 Steinakirchen (AT)
(74) Vertreter: Patentanwaltskanzlei Matschnig & Forsthuber OG

(56) Entgegenhaltungen:
- DE-A1-102007 004 001
- JP-A- S62 233 233
- JP-U- S59 187 425
- "Konstruktionen schnell validieren", Autodesk Moldflow Adviser, 17. April 2009 (2009-04-17), XP055217263, Gefunden im Internet: URL:http://www.ricone.de/Bilder sonst/AMA_Information.pdf [gefunden am 2015-09-30]

## Beschreibung

Die Erfindung betrifft eine Schließeinheit für eine Spritzgießmaschine, die Schließeinheit umfassend ein Formwerkzeug mit einer Düsenseite und einer Auswerferseite sowie ein an der Düsenseite angeordnetes Heißkanalsystem mit zumindest einer nadelverschlossenen Spritzdüse, wobei das Formwerkzeug ein Formnest mit einem Montagebereich und einem Klarsichtbereich definiert und eine Angussmündung im Montagebereich angeordnet ist sowie ein Spritzgußverfahren zur Herstellung von Klarsichtteilen.

Aus der DE 10 2007 004 001 A1 ist ein Injektor für Ausrüstungen zum Spritzgießen von Kunststoffmaterialien bekannt. Der Injektor weist eine Düsennadel auf, welche in einem axialen Durchgang einer Düsenspitze angeordnet ist.

Die JP S59 187425 U beschreibt ein Gussverfahren, bei welchem ein Harz erhitzt, in einen Hohlraum injiziert und anschließend abgekühlt wird.

Spritzgußverfahren sind die am weitesten verbreiteten Herstellungsverfahren zur Herstellung von Kunststoffformteilen. Dabei wird in einer Spritzgießmaschine der jeweilige Werkstoff verflüssigt und unter hohem Druck in eine Form eingespritzt, woraufhin der Werkstoff aushärtet und das weitgehend fertige Werkstück aus der Form ausgeworfen werden kann. Das Spritzgießwerkzeug bzw. Formwerkzeug besteht aus einer Düsenseite, die an die zur Verflüssigung des Werkstoffs verwendete Spritzgießmaschine anschließt und aus einer Auswerferseite, die in der sogenannten Schließeinheit zueinander geführt und aneinander gepresst werden können.

Zur Herstellung von Klarsichtteilen, beispielsweise von Abdeckscheiben für Fahrzeugscheinwerfer, werden vor allem Heißkanalsysteme mit nadelverschlossenen Spritzdüsen eingesetzt, bei denen das Verschließen der beheizten Spritzdüsen mit einer Verschlussnadel zu einem druckfesten Verschließen der Spritzdüsen führt, so dass das Werkstück beim Aushärten bzw. nach einem Anhärten komprimiert werden kann, was durch das genannte Aneinanderpressen der Düsenseite und der Auswerferseite

in der Schließeinheit erfolgt. Dieses Kompressionsverfahren wirkt sich positiv auf die Maßhaltigkeit beim vollständigen Erstarren aus. Offene, d.h. nicht nadelverschlossene Düsensysteme, sind für ein solches Kompressionsverfahren nicht geeignet, da es beim Komprimieren zu einem Rückfluss von Material aus dem vom Formwerkzeug definierten Formnest und somit zu keinem nennenswerten Druckaufbau kommen würde.

Bei der Herstellung von hochtransparenten und besonders hochwertigen Klarsichtteilen, insbesondere zur Verwendung als Abdeckscheiben für Fahrzeugscheinwerfer für besonders hochwertige Fahrzeuge, ergibt sich jedoch bei der Verwendung von nadelverschlossenen Spritzdüsen dahingehend ein Problem, als es durch den in aller Regel asymmetrischen Materialzufluss in die Spritzdüse bei geöffneter Verschlussnadel zu einer Auslenkung der Nadel kommt, was dazu führt, dass der verflüssigte Werkstoff, beispielsweise ein Thermoplast (z.B.: Polycarbonat) asymmetrisch aus der Angussmündung austritt. Während der Anguss eines Werkstückes ohnehin eine Störstelle darstellt, die zur Herstellung von Klarsichtteilen deshalb im Montagebereich und nicht im Klarsichtbereich des Werkstücks angeordnet wird, entsteht durch diesen asymmetrischen Materialaustritt im Formnest eine Fließdynamik, die dazu führt, dass sich das Material ausgehend von der Angussmündung nicht wie gewünscht halbkreisförmig in den Klarsichtbereich ergießt, sondern in Form von zwei Fließfronten, die sich in einer Linie ausgehend von der Angussmündung zu einer Bindenaht vereinigen, an der die Materialdicke reduziert ist. Dies führt zu einer Verminderung der Qualität des optischen Eindrucks des Klarsichtteils, was insbesondere bei der Herstellung von Scheinwerfern für hochwertige Fahrzeuge nicht hinnehmbar ist.

Der Erfindung liegt daher die Aufgabe zugrunde, diese Unzulänglichkeit bei der Herstellung von Klarsichtteilen mittels Spritzgußverfahren zu überwinden. Zur Lösung dieser Aufgabe ist eine Schließeinheit der eingangs genannten Art erfindungsgemäß entsprechend der Merkmalskombination des Anspruchs 1 ausgebildet.

Dadurch dass eine als Wall ausgebildete Fließbremse zwischen der Angussmündung und dem Klarsichtbereich angeordnet ist, kommt es trotz des asymmetrischen Materialaustritts aus der Angussmündung durch die Wirkung der Fließbremse zu einer Vergleichmäßigung des Materialstroms, so dass das Material bzw. der Werkstoff wie gewünscht im Wesentlichen halbkreisförmig ausgehend von der Angussmündung in den Klarsichtbereich fließt bzw. gedrückt wird. Im Zusammenhang mit der vorliegenden Erfindung definiert das Formwerkzeug ein Formnest mit einem Montagebereich und einem Klarsichtbereich, wobei diese Nomenklatur zwar auf das Formwerkzeug bezogen ist, jedoch im Zusammenhang mit unterschiedlichen Bereichen des herzustellenden Werkstücks zu verstehen ist. Wie bereits erwähnt, hat es sich die vorliegende Erfindung zur Aufgabe gestellt, die Herstellung von Klarsichtteilen, die für Abdeckscheiben für Fahrzeugscheinwerfer verwendet werden, zu verbessern, so dass dem Fachmann unmittelbar klar ist, dass sich die Begriffe Montagebereich und Klarsichtbereich auf solche Bereiche eines Werkstücks beziehen. Unter Montagebereich ist somit ein Bereich des Werkstücks zu verstehen, der der Festlegung, beispielsweise einer Abdeckscheibe, an einem Scheinwerfergehäuse oder Ähnlichem dient, und an den daher geringere Anforderungen hinsichtlich der optischen Qualität gestellt werden können, während ein Klarsichtbereich als ein Bereich aufzufassen ist, der höchsten optischen Ansprüche hinsichtlich der Transparenz und des optischen Eindrucks bei der Betrachtung eines Scheinwerfers genügen muss. Beim erfindungsgemäßen Formwerkzeug ist somit die Angussmündung in einem Bereich der Düsenseite des Formwerkzeugs angeordnet, der nicht in einem Klarsichtbereich des herzustellenden Werkstücks, sondern der einem Bereich des herzustellenden Werkstücks entspricht, der zur Montage und Befestigung des Werkstücks, insbesondere einer Abdeckscheibe eines Fahrzeugscheinwerfers, entspricht. Die Anordnung der Fließbremse ist erfindungsgemäß als zwischen der Angussmündung und dem Klarsichtbereich definiert, so dass dem Fachmann unmittelbar klar wird, dass die Fließbremse ebenfalls im Montagebereich des Formwerkzeugs angeordnet ist. Aufgrund dieser Anordnung kommt es zu einer Vergleichmäßigung des asymmetrisch aus der Angussmündung austretenden Materialstroms, welches nach dem Passieren der Fließbremse mehr oder weniger halbkreisförmig in den Klarsichtbereich im Formwerkzeug einströmt, so dass die Entstehung einer Bindenaht im Klarsichtbereich effektiv vermieden wird.

Wie bereits erwähnt, erfolgt die Anordnung einer Fließbremse zum Ausgleich eines asymmetrischen Materialflusses in Folge der Auslenkung der Verschlussnadel der Spritzdüse bzw. Heißkanaldüse aufgrund eines asymmetrischen Zustromes von Material bzw. Werkstoff zur Spritzdüse. Der Zustrom von Material bzw. Werkstoff in die Spritzdüse führt also zu einer Auslenkung der Verschlussnadel, wenn diese in der Spritzdüse geöffnet ist, so dass die Verschlussnadel bei Materialzustrom je nach Aufbau des Heißkanalsystems eine typische Auslenkposition einnimmt. Für eine optimale Vergleichmäßigung des Materialflusses im Formnest, und insbesondere im Klarsichtbereich des Formnestes, ist die Erfindung daher dahingehend weitergebildet, dass die Fließbremse an der einer Auslenkposition der Verschlussnadel abgewandten Seite der Angussmündung angeordnet ist. Mit anderen Worten ist die Fließbremse an jener Seite der Angussmündung angeordnet, an der mehr Material austritt, da durch den Materialzufluss die Verschlussnadel ausgelenkt wird und daher auf der der Auslenkposition abgewandten Seite ein größerer Querschnitt für den Austritt von Material bzw. verflüssigtem Werkstoff freigegeben wird. Die Auslenkposition der Verschlussnadel wird definiert durch die Richtung, aus der das verflüssigte Material aus dem Heißkanalsystem in die Spritzdüsen fließt. Wenn das Material nämlich nicht axial in die Spritzdüse geführt wird sondern seitlich in die Spritzdüse fließt, wird ein Druck auf die in der Spritzdüse liegende Verschlussnadel ausgeübt, was dann, wenn die Verschlussnadel nicht in der Verschlussposition ruht und dabei an ihren angussseitigen Ende geführt ist, dazu führt, dass die Verschlussnadel in Richtung der Zustromrichtung ausgelenkt wird. Die Auslenkposition ist durch die Zustrommenge an verflüssigten Werkstoff definiert und ist in der Regel dann erreicht, wenn die Verschlussnadel so stark ausgelenkt wird, dass sie in Anlage an die Spritzdüse außerhalb des Nadelsitzes gelangt.

Um eine effiziente Vergleichmäßigung des asymmetrisch austretenden Materialstroms bzw. eine effiziente Abschattung des Klarsichtbereichs zu gewährleisten, ist die Erfindung bevorzugt dahingehend weitergebildet, dass die Längserstreckung der Fließbremse an der dem Klarsichtbereich zugewandten Seite zumindest dem 2-fachen, bevorzugt zumindest dem 3-fachen des Durchmessers der Angussmündung entspricht. Wenn die Verhältnisse der Längserstreckung der Fließbremse, an der dem Klarsichtbereich zugewandten Seite in diesem Bereich lieg, ist es nach Erkenntnissen der Erfinder gewährleistet, dass sich keine Bindenaht im Klarsichtbereich des Formwerkzeugs bzw. des Werkstücks bildet, so dass die erfindungsgemäße Aufgabe zufriedenstellend gelöst wird.

Gemäß einer weiteren bevorzugten Ausführungsform der vorliegenden Erfindung ist die Schließeinheit dahingehend weitergebildet, dass die Längserstreckung der Fließbremse dem 4-bis 6-fachen, bevorzugt dem 5-fachen der Breite der Fließbremse entspricht. Unabhängig von der tatsächlichen Größe der Fließbremse bzw. des Formwerkzeugs ist bei diesen Verhältnissen gewährleistet, dass sich keine störenden Bindenähte im Klarsichtbereich bilden.

Gemäß einer konkreten bevorzugten Ausführungsform der vorliegenden Erfindung ist es hierbei vorgesehen, dass die Längserstreckung der Fließbremse ungefähr 30 mm bis 50 mm, bevorzugt 40 mm beträgt.

In aller Regel weist ein Formnest zur Herstellung von Abdeckscheiben für Kraftfahrzeugscheinwerfer eine Dicke von ungefähr 2,5 mm bis 3,5 mm auf, was im Wesentlichen der Dicke einer Abdeckscheibe für einen Kraftfahrzeugscheinwerfer entspricht, wobei das tatsächliche Maß aufgrund der oben bereits erwähnten Kompression zur Verbesserung der Maßhaltigkeit ein wenig geringer ist als die Dicke des Formnestes zu Beginn des Spritzgußvorgangs. Bei den genannten ungefähren Dimensionen ist es gemäß einer bevorzugten Ausführungsform der vorliegenden Erfindung vorgesehen, dass die Fließbremse eine Dicke von 0,5 mm bis 2,0 mm, insbesondere 1,0 mm bis 1,5 mm aufweist. Bei diesen Dicken der Fließbremse erfolgt eine Verminderung des Durchtrittsquerschnitts von der Angussmündung in Richtung des Klarsichtbereichs von 50 % und mehr, was sich bei Spritzgußversuchen der Erfinder als zweckmäßig erwiesen hat.

Abhängig von der tatsächlichen Form des Klarsichtteils, welches unter Verwendung der erfindungsgemäßen Schließeinheit hergestellt werden soll, kann es gemäß einer bevorzugten Ausführungsform der vorliegenden Erfindung vorgesehen sein, dass die Fließbremse die Angussmündung zumindest teilweise umgibt, wobei es sich als besonders vorteilhaft herausgestellt hat, wenn die Fließbremse die Angussmündung zu zwischen 90° und 270°, insbesondere zu 180° umgibt.

Prinzipiell kann die Fließbremse sowohl an der Düsenseite als auch an der Auswerferseite des Formwerkzeugs angeordnet sein. Zweckmäßigerweise und insbesondere dann, wenn die Fließbremse, die Angussmündung zumindest teilweise ergibt, wie dies einer bevorzugten Ausführungsform der vorliegenden Erfindung entspricht, ist es jedoch bevorzugt, dass die Fließbremse an der Düsenseite angeordnet ist.

Während die Fließbremse als ein austauschbares Teil, beispielsweise an die Düsenseite im Bereich der Angussmündung beispielsweise durch Schrauben, angebracht werden kann, ist es gemäß einer bevorzugten Ausführungsform der vorliegenden Erfindung vorgesehen, dass die Fließbremse einstückig mit der Düsenseite ausgebildet ist, was bei hohen Stückzahlen von Klarsichtteilen, die mit der erfindungsgemäßen Schließeinheit hergestellt werden sollen, vorteilhaft ist. Alternativ kann die Fließbremse auch an der Auswerferseite angeordnet und mit dieser einstückig ausgebildet sein.

Um ungewünschte Verwirbelungen und erhöhte Scherbelastungen des Materials bzw. des verflüssigten Werkstoffes zu vermeiden, ist es bevorzugt vorgesehen, dass die Kanten der Fließbremse verrundet sind.

Das erfindungsgemäße Spritzgußverfahren zeichnet sich durch die Verwendung einer Schließeinheit gemäß der vorliegenden Erfindung aus.

Die Erfindung wird nachfolgend anhand eines in der Zeichnung schematisch dargestellten Ausführungsbeispiels näher erläutert. In dieser zeigen
Fig. 1 eine schematische teilweise Schnittdarstellung einer Schließeinheit mit einer nadelverschlossenen Spritzdüse aus dem Stand der Technik im geschlossenen Zustand;
Fig. 2a eine Darstellung der Schließeinheit gemäß Fig. 1 mit geöffneter Verschlussnadel;
Fig. 3a eine Auslenkposition der geöffneten Verschlussnadel bei mit Material durchströmter Spritzdüse;

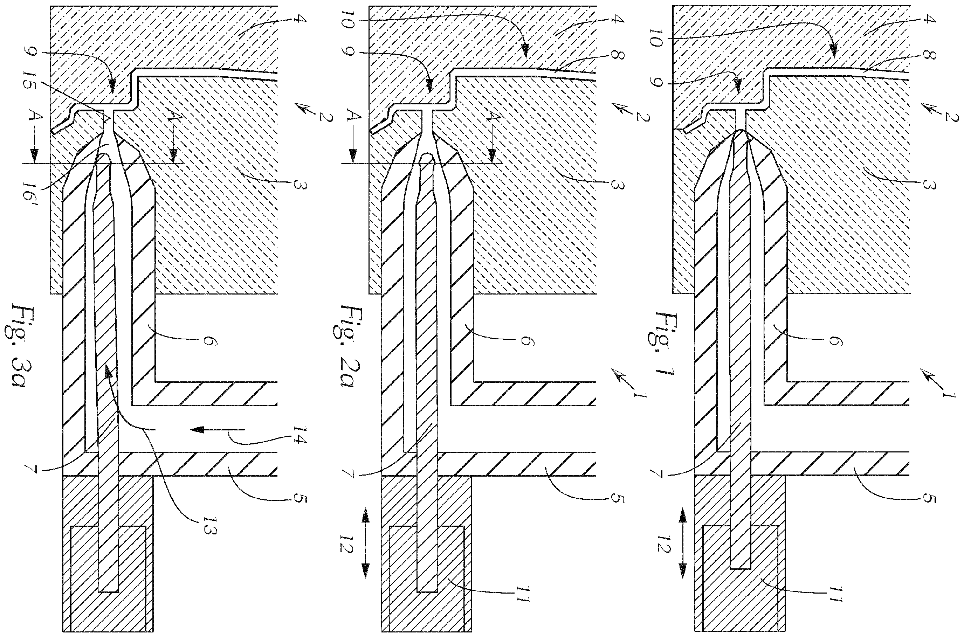

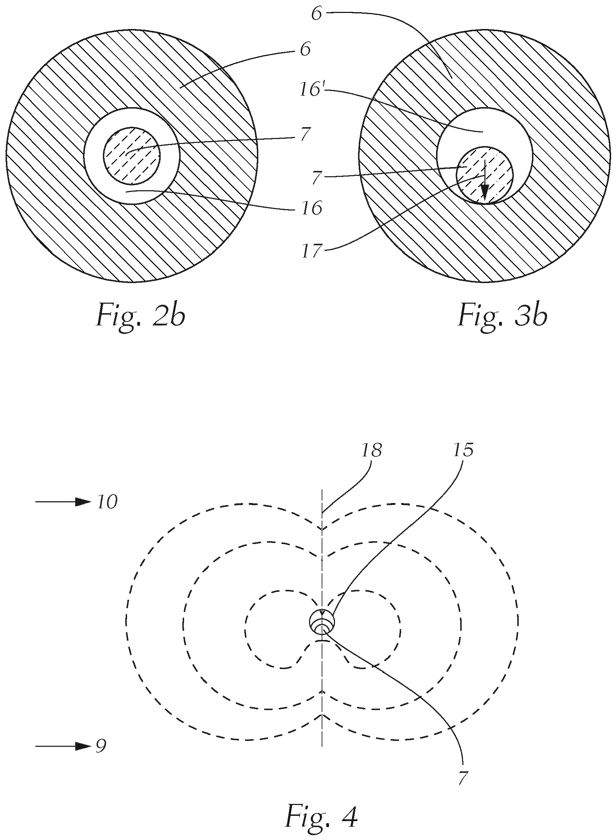

die Fig. 2b und 3b Schnittdarstellungen gemäß der Linien A-A der Fig. 2a und 3a, in denen die Anlage der Verschlussnadel und der asymmetrische Durchtrittsquerschnitt für verflüssigtes Material ersichtlich ist;
Fig. 4 eine schematische Darstellung der Entstehung einer Bindenaht aufgrund asymmetrischen Materialaustritts aus der Angussmündung bei ausgelenkter Verschlussnadel;

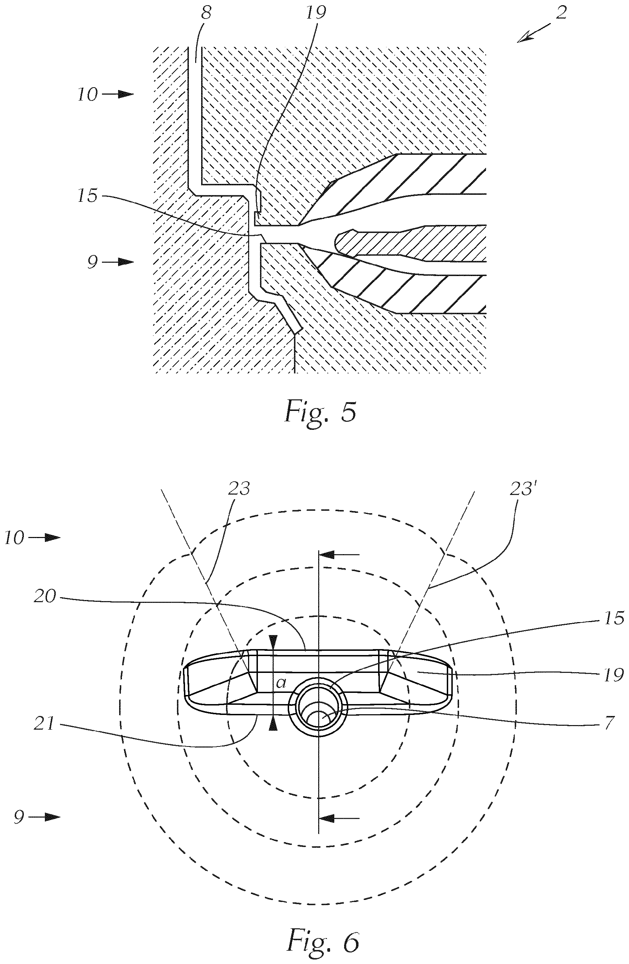

Fig. 5 eine schematische Darstellung einer erfindungsgemäßen Schließeinheit mit geöffneter, ausgelenkter Verschlussnadel und Fließbremse;
Fig. 6 eine schematische Darstellung des Materialstroms aufgrund der Fließbremse;

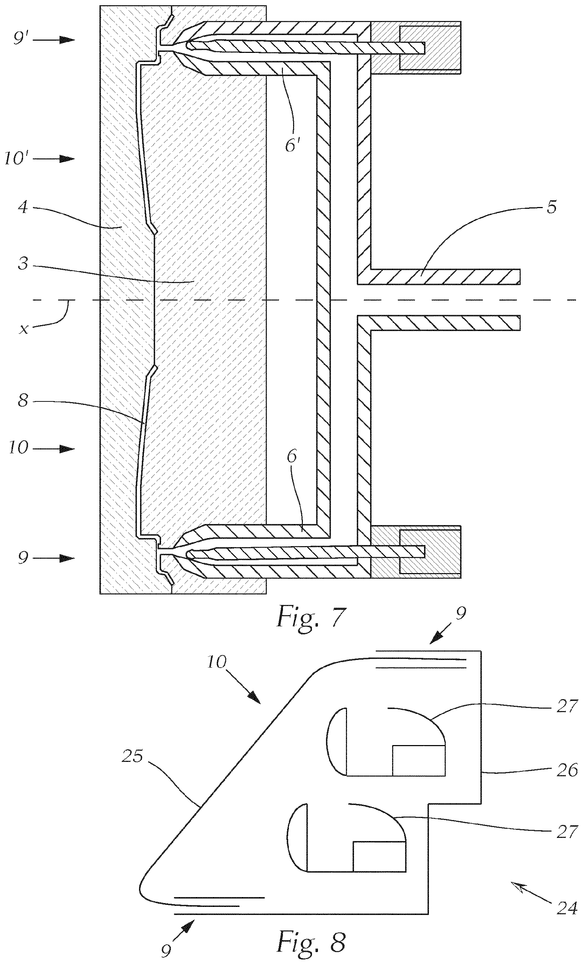

Fig. 7 eine Gesamtansicht einer erfindungsgemäßen Schließeinheit mit Heißkanalsystem mit nadelverschlossenen Spritzdüsen im Schnitt und
Fig. 8 eine schematische Darstellung zur Erläuterung des Montagebereichs und des Klarsichtbereichs einer Abdeckscheibe für einen Fahrzeugscheinwerfer.

Soweit möglich und sinnvoll sind in sämtlichen Figuren gleiche Teile mit gleichen Bezugszeichen versehen.

In Fig. 1 ist eine Schließeinheit mit 1 bezeichnet und die Schließeinheit 1 umfasst ein Formwerkzeug 2 mit einer Düsenseite 3 und einer Auswerferseite 4 sowie ein an der Düsenseite angeordnetes Heißkanalsystem 5 mit einer Spritzdüse 6, welche durch eine Verschlussnadel 7 verschlossen und geöffnet werden kann. Das Formwerkzeug 2 definiert ein Formnest 8 mit einem Montagebereich 9 und einem Klarsichtbereich 10. Die Begriffe "Montagebereich" und "Klarsichtbereich" können gleichwertig für Bereiche des Formnestes 8, für Bereiche der Düsenseite 3 oder der Auswerferseite 4 des Formwerkzeugs 2 sowie für die entsprechenden Bereiche einer Abdeckscheibe für einen Fahrzeugscheinwerfer, wie in Fig. 8 gezeigt, verwendet werden. Die Verschlussnadel 7 wird beispielsweise mit einem elektrischen, pneumatischen oder hydraulischen Verschluss 11 in Richtung des Doppelpfeils 12 hin und her bewegt, um ein Öffnen bzw. Schließen der Spritzdüse 6 zu bewerkstelligen. Während in Fig. 1 die Spritzdüse in geschlossenem Zustand dargestellt ist, ist in Fig. 2a die Verschlussnadel 7 in einer zurückgezogenen Position dargestellt, wodurch ein Durchtrittsquerschnitt an der Spitze der Verschlussdüse 6 freigegeben, durch welchen Material hindurchtreten kann.

In Fig. 3a ist dargestellt, dass im Betrieb der Spritzgießmaschine verflüssigtes Material bzw. verflüssigter Werkstoff, beispielsweise ein Thermoplast, in Richtung des Pfeils 13 durch das Heißkanalsystem 5 in die Spritzdüse 6 fließt, so dass die Verschlussnadel 7 in die Richtung der Zuflussrichtung des Materials, die in Fig. 3a durch die Pfeile 13 bzw. 14 dargestellt ist, ausgelenkt wird, wenn die Verschlussnadel 7, wie in Fig. 3a dargestellt, zurückgezogen ist und daher an der Spitze der Spritzdüse 6 keine Führung hat. Wie in Fig. 3a ersichtlich ist und wie sich insbesondere auch aus der Darstellung gemäß der Fig. 3b ergibt, resultiert aus der Auslenkung der Verschlussnadel 7 ein asymmetrischer Durchtrittsquerschnitt 16' an der Spitze der Spritzdüse 6 und somit ein asymmetrischer Materialaustritt an der Angussmündung 15 im Montagebereich 9 der Düsenseite 3 des Formwerkzeugs 2. Zur weiteren Darstellung dienen die Schnittdarstellungen gemäß der Fig. 2b und 3b, wo bei nicht durch Materialfluss belasteter Verschlussnadel 7 ein symmetrischer Durchtrittsquerschnitt 16 in Form eines ringförmigen Querschnitts ausgebildet wird. In Fig. 3b ist zu erkennen, dass die Auslenkung der Verschlussnadel 7 in Richtung des Pfeils 17 zu einem stark asymmetrischen Austrittsquerschnitt 16' führt, so dass zugeführtes verflüssigtes thermoplastisches Material vermehrt an der Oberseite der Spritzdüse 6 austritt.

In Fig. 4 ist noch einmal die Verschlussnadel 7 in ihrer ausgelenkten Position gemäß der Fig. 3b zu erkennen und die Fließfronten des austretenden Materials sind ausgehend von der Angussmündung 15 im Montagebereich mit strichlierten Linien dargestellt. Aus Fig. 4 lässt sich erkennen, dass sich entlang einer Achse 18 die Wellenfronten vereinigen, wobei sich eine Bindenaht bildet, die im Beispiel gemäß der Fig. 4, welche das Fließbild einer nadelverschlossenen Spritzdüse in einem Formwerkzeug gemäß dem Stand der Technik darstellt, direkt nach oben, und somit in den Klarsichtbereich 10 des Formwerkzeugs bzw. in der Folge auch des Werkstücks verläuft.

Gemäß der vorliegenden Erfindung und gemäß der Darstellung nach Fig. 5 ist nun eine als Wall ausgebildete Fließbremse 19 im Montagebereich 9 zwischen der Angussmündung 15 und dem Klarsichtbereich 9 angeordnet. Die Fließbremse ist als Wall bzw. als Erhöhung und somit als Verjüngung des Formnests 8 ausgebildet. Durch die Verjüngung des Querschnitts des Formnests 8 im Bereich der Fließbremse 19 wird ein veränderter Materialfluss in Richtung des Klarsichtbereichs 9 des Formwerkzeugs 2 erreicht, wie dies schematisch mit Hilfe strichlierter Linien in Fig. 6 dargestellt ist. Die Fließbremse 19 umgibt im Beispiel gemäß Fig. 6 die Angussmündung 15 zu ungefähr 200 °. Als beispielhafte Maße für den Durchmesser der Angussmündung 15 können 5 mm bis 8 mm, und für die Längserstreckung der Fließbremse 19 können ungefähr 40 mm angegeben werden. Jene Bereiche, die zuverlässig ohne die Ausbildung einer Bindenaht gegossen werden können, befinden sich zwischen den Strahlen 23 und 23'.

In Fig. 7 ist nun eine Gesamtansicht auf eine erfindungsgemäße Schließeinheit dargestellt, welche symmetrisch bezüglich einer Mittelachse X aufgebaut ist. Das Heißkanalsystem 5 teilt sich T-förmig in zwei Stränge auf, die zwei Spritzdüsen 6 bzw. 6' mit verflüssigtem thermoplastischem oder auch mit duroplastischem Werkstoff für beispielsweise eine Abdeckscheibe eines Fahrzeugscheinwerfers versorgen. Die Düsenseite 3 und die Auswerferseite 4 formen in diesem Beispiel zwei Formnester 8 bzw. 8', die jeweils zumindest einen Montagebereich 9 bzw. 9' und einen Klarsichtbereich 10 bzw. 10' aufweisen. Mit der Anordnung gemäß der Fig. 7 können somit bei einem Spritzgußschritt zwei Abdeckscheiben für einen Fahrzeugscheinwerfer hergestellt werden.

In Fig. 8 ist eine stark vereinfachte Darstellung eines Fahrzeugscheinwerfers 24 ersichtlich, bei dem eine Abdeckscheibe 25 mit Montagebereich 9 an einem Gehäuse 26 des Scheinwerfers 24 festgelegt ist. Mit 27 sind Leuchtelemente des Scheinwerfers 24 bezeichnet.

## Patentansprüche

1. Schließeinheit (1) für eine Spritzgießmaschine, die Schließeinheit (1) umfassend ein Formwerkzeug (2) mit einer Düsenseite (3) und einer Auswerferseite (4) sowie ein an der Düsenseite (3) angeordnetes Heißkanalsystem (5) mit zumindest einer nadelverschlossenen Spritzdüse (6, 6'), wobei das Formwerkzeug (2) ein Formnest (8) mit einem Montagebereich (9) und einem Klarsichtbereich (10) definiert und eine Angussmündung (15) im Montagebereich (9) angeordnet ist, wobei eine als Wall ausgebildete Fließbremse (19) zwischen der Angussmündung und dem Klarsichtbereich angeordnet ist, **dadurch gekennzeichnet, dass** die Fließbremse (19) an der einer Auslenkposition der Verschlussnadel (7) abgewandten Seite der Angussmündung (15) angeordnet ist.

2. Schließeinheit nach Anspruch 1, **dadurch gekennzeichnet, dass** die Längserstreckung der Fließbremse (19) an der dem Klarsichtbereich (10) zugewandten Seite zumindest dem 2-fachen, bevorzugt zumindest dem 3-fachen des Durchmessers der Angussmündung (15) entspricht.

3. Schließeinheit nach einem der Ansprüche 1 oder 2, **dadurch gekennzeichnet, dass** die Längserstreckung der Fließbremse (19) dem 4-fachen bis 6-fachen, bevorzugt dem 5-fachen der Breite der Fließbremse (19) entspricht.

4. Schließeinheit nach einem der Ansprüche 1 bis 3, **dadurch gekennzeichnet, dass** die Längserstreckung der Fließbremse (19) ungefähr 30 mm bis 50 mm, bevorzugt 40 mm beträgt.

5. Schließeinheit nach einem der Ansprüche 1 bis 4, **dadurch gekennzeichnet, dass** die Fließbremse (19) eine Dicke von 0,5 mm bis 2,5 mm, bevorzugt 1,0 mm bis 1,5 mm beträgt.

6. Schließeinheit nach einem der Ansprüche 1 bis 5, **dadurch gekennzeichnet, dass** die Fließbremse (19) die Angussmündung (15) zumindest teilweise umgibt.

7. Schließeinheit nach einem der Ansprüche 1 bis 6, **dadurch gekennzeichnet, dass** die Fließbremse (19) die Angussmündung (15) zu zwischen 90° und 270°, insbesondere zu 180° umgibt.

8. Schließeinheit nach einem der Ansprüche 1 bis 7, **dadurch gekennzeichnet, dass** die Fließbremse (19) an der Düsenseite (3) angeordnet ist.

9. Schließeinheit nach einem der Ansprüche 1 bis 8, **dadurch gekennzeichnet, dass** die Fließbremse (19) einstückig mit der Düsenseite (3) ausgebildet ist.

10. Schließeinheit nach einem der Ansprüche 1 bis 9, **dadurch gekennzeichnet, dass** die Kanten der Fließbremse (19) verrundet sind.

11. Spritzgußverfahren zur Herstellung von Klarsichtteilen, **gekennzeichnet durch** die Verwendung einer Schließeinheit (1) gemäß einem der Ansprüche 1 bis 10.

## Claims

1. Closing unit (1) for an injection moulding machine, said closing unit (1) comprising a forming tool (2) with a nozzle side (3) and an ejector side (4), and a heating channel system (5) arranged on the nozzle side (3) with at least one injection nozzle (6, 6') closed by a needle valve, wherein the forming tool (2) defines a moulding post (8) with a mounting region (9) and a transparent region (10), and a feed opening (15) is arranged in the mounting region (9), wherein a flow brake (19) designed as a wall is arranged between the feed opening and the transparent region, **characterized in that** the flow brake (19) is arranged on the side of the feed opening (15) facing away from a deflection position of the needle valve (7).

2. Closing unit according to Claim 1, **characterized in that** the longitudinal extension of the flow brake (19) on the side facing towards the transparent region (10) is equal to twice, preferably at least three times the diameter of the feed opening (15).

3. Closing unit according to Claim 1 or 2, **characterized in that** the longitudinal extension of the flow brake (19) is equal to 4 to 6 times, preferably 5 times the width of the flow brake (19).

4. Closing unit according to one of Claims 1 to 3, **characterized in that** the longitudinal extension of the flow brake (19) is approximately 30 mm to 50 mm, preferably 40 mm.

5. Closing unit according to one of Claims 1 to 4, **characterized in that** the flow brake (19) has a thickness of 0.5 mm to 2.5 mm, preferably 1.0 mm to 1.5 mm.

6. Closing unit according to one of Claims 1 to 5, **characterized in that** the flow brake (19) at least partially surrounds the feed opening (15).

7. Closing unit according to one of Claims 1 to 6, **characterized in that** the flow brake (19) surrounds the feed opening (15) up to between 90° and 270°, in particular up to 180°.

8. Closing unit according to one of Claims 1 to 7, **characterized in that** the flow brake (19) is arranged on the nozzle side (3).

9. Closing unit according to one of Claims 1 to 8, **characterized in that** the flow brake (19) is formed integrally with the nozzle side (3).

10. Closing unit according to one of Claims 1 to 9, **characterized in that** the edges of the flow brake (19) are rounded.

11. Injection moulding method for producing transparent parts, **characterized by** the use of a closing unit (1) according to one of Claims 1 to 10.

## Revendications

1. Unité de fermeture (1) pour une machine de moulage par injection, l'unité de fermeture (1) comprenant un moule (2) avec un côté de buse (3) et un côté d'éjecteur (4) ainsi qu'un système de canal chauffant (5) disposé sur le côté de buse (3) avec au moins une buse d'injection (6, 6') obturée par aiguilles, sachant que le moule (2) définit une empreinte de moule (8) avec une zone de montage (9) et une zone transparente (10) et une embouchure d'entrée d'injection (15) est disposée dans la zone de montage (9), sachant qu'un frein d'écoulement (19) constitué comme un rempart est placé entre l'embouchure d'entrée d'injection et la zone transparente, **caractérisé en ce que** le frein d'écoulement (19) est placé sur le côté de l'embouchure d'entrée d'injection (15) détourné d'une position d'orientation de l'aiguille d'obturation (7).

2. Unité de fermeture selon la revendication 1, **caractérisée en ce que** l'extension longitudinale du frein d'écoulement (19) sur le côté tourné vers la zone transparente (10) correspond au moins 2 fois, de préférence au moins 3 fois au diamètre de l'embouchure d'entrée d'injection (15).

3. Unité de fermeture selon l'une quelconque des revendications 1 ou 2, **caractérisée en ce que** l'extension longitudinale du frein d'écoulement (19) correspond 4 fois à 6 fois, de préférence 56 fois, à la largeur du frein d'écoulement (19).

4. Unité de fermeture selon l'une quelconque des revendications 1 à 3, **caractérisée en ce que** l'extension longitudinale du frein d'écoulement (19) est à peu près de 30 mm à 50 mm, de préférence de 40 mm.

5. Unité de fermeture selon l'une quelconque des revendications 1 à 4, **caractérisée en ce que** le frein d'écoulement (19) comporte une épaisseur de 0,5 mm à 2,5 mm, de préférence 1,0 mm à 1,5 mm.

6. Unité de fermeture selon l'une quelconque des revendications 1 à 5, **caractérisée en ce que** le frein d'écoulement (19) entoure au moins en partie l'embouchure d'entrée d'injection (15).

7. Unité de fermeture selon l'une quelconque des revendications 1 à 6, **caractérisée en ce que** le frein d'écoulement (19) entoure l'embouchure d'entrée d'injection (15) entre 90° et 270°, en particulier à 180°.

8. Unité de fermeture selon l'une quelconque des revendications 1 à 7, **caractérisée en ce que** le frein d'écoulement (19) est placé sur le côté de buse (3).

9. Unité de fermeture selon l'une quelconque des revendications 1 à 8, **caractérisée en ce que** le frein d'écoulement (19) est constitué en une seule pièce avec le côté de buse (3).'

10. Unité de fermeture selon l'une quelconque des revendications 1 à 9, **caractérisée en ce que** les bords du frein d'écoulement (19) sont arrondis.

11. Procédé de moulage par injection pour la fabrication de pièces transparentes, **caractérisée par** l'utilisation d'une unité de fermeture (1) selon l'une quelconque des revendications 1 à 10.
